# EUROPÄISCHE PATENTSCHRIFT

(11) **EP 2 703 244 B1**
(45) Veröffentlichungstag und Bekanntmachung des Hinweises auf die Patenterteilung: **26.11.2014**
(21) Anmeldenummer: 13181757.9
(22) Anmeldetag: 27.08.2013
(51) Int. Cl.: B65G 19/02, B65G 9/00, B61B 10/02

(54) **Zwischenträgereinheit zum hängenden Transport eines Objekts und Hängeförderanlage mit einer solchen Zwischenträgereinheit**
Intermediate support unit for suspended transport of an object and overhead conveyor system with such an intermediate support unit
Unité de support intermédiaire pour le transport suspendu d'un objet et installation de transport suspendue dotée d'une telle unité de support intermédiaire

(30) Priorität: 28.08.2012 DE 102012107923
(43) Veröffentlichungstag der Anmeldung: 05.03.2014
(73) Patentinhaber: psb intralogistics GmbH, 66955 Pirmasens (DE)
(72) Erfinder: DIETZ, Lothar, 66955 Pirmasens (DE)
(74) Vertreter: Viering, Jentschura & Partner Patent- und Rechtsanwälte

(56) Entgegenhaltungen:
- CH-A5- 560 641
- DE-U1-202008 007 100
- US-A- 4 354 435
- US-B2- 6 758 325

## Beschreibung

Die Erfindung betrifft einen Zwischenträger zum hängenden Transport eines Objekts in eine von einer Transportbahn definierten Transportrichtung in einer Hängeförderanlage, eine Zwischenträgereinheit zum hängenden Transport eines Objekts in eine von einer Transportbahn definierten Transportrichtung in einer Hängeförderanlage sowie eine Hängeförderanlage mit einer solchen Zwischenträgereinheit.

Aus der DE 20 2008 015 890 U1 ist ein Zwischenhaken für Förderbahnen bekannt, mit einem Grundkörper mit einer an einer Unterseite des Grundkörpers angeordneten Aufnahmeeinrichtung zur Aufnahme eines Stückträgers und mit einem an der Oberseite des Grundkörpers angeordneten Trägerelement zur Befestigung an der Förderbahn. Das Dokument DE 20 2008 007 D1 offenbart einen Zwischenträger zum hängenden Transport eines Objekts in eine von einer Transportbahn definierten Transportrichtung in einer Hängeförderanlage, mit einer Traverse mit bezüglich der Transportrichtung einem vorlaufenden Endabschnitt und einem nachlaufenden Endabschnitt, wobei die Traverse als ein insgesamt starrer Körper mit einer Oberseite, einer Unterseite, einer am vorlaufenden Endabschnitt ausgebildeten vorderen Stirnseite, einer am nachlaufenden Endabschnitt ausgebildeten hinteren Stirnseite sowie einer linken und einer rechten Seite, die sich zwischen der Oberseite, der Unterseite, der vorderen und der hinteren Stirnseite erstrecken, ausgebildet ist, wobei von der vorderen Stirnseite eine Konvexe und von der hinteren Stirnseite eine zu der Konvexe komplementäre Konkave ausgebildet ist, sodass in Transportrichtung aneinander angrenzende Traversen stirnseitig formschlüssig ineinander eingreifen können, einem Anhängeelement, das am vorlaufenden Endabschnitt der Traverse sich über die Oberseite der Traverse nach oben hin hinaus erstreckend ausgebildet ist und das zum Anhängen an die Transportbahn vorgesehen ist, und einer Aufhänge-Einrichtung, die an der Traverse ausgebildet ist und zum daran Anhängen des Objekts vorgesehen ist.

Durch die Erfindung wird ein Zwischenträger zum hängenden Transport eines Objekts in eine von einer Transportbahn (oder Führungsbahn) definierten Transportrichtung in einer Hängeförderanlage, eine Zwischenträgereinheit zum hängenden Transport eines Objekts in eine von einer Transportbahn definierten Transportrichtung in einer Hängeförderanlage, sowie eine Hängeförderanlage mit einer solchen Zwischenträgereinheit geschaffen, womit für eine Hängeförderanlage eine hohe Anpassungsfähigkeit an unterschiedliche zu transportierende Objekte/Gegenstände sowie ein zuverlässiger Transportbetrieb erzielt werden.

Die Erfindung stellt hierzu bereit einen Zwischenträger zum hängenden Transport eines Objekts in eine von einer Transportbahn definierten Transportrichtung in einer Hängeförderanlage gemäß Anspruch 1. Der Zwischenträger weist auf (oder besteht aus) eine(r) Traverse mit bezüglich der Transportrichtung einem vorlaufenden Endabschnitt und einem nachlaufenden Endabschnitt, wobei die Traverse als ein insgesamt starrer Körper mit einer Oberseite, einer Unterseite, einer am vorlaufenden Endabschnitt ausgebildeten vorderen Stirnseite, einer am nachlaufenden Endabschnitt ausgebildeten hinteren Stirnseite sowie einer linken und einer rechten Seite, die sich zwischen der Oberseite, der Unterseite, der vorderen und der hinteren Stirnseite erstrecken, ausgebildet ist, wobei von bzw. in der vorderen Stirnseite eine Konkave und von bzw. an der hinteren Stirnseite eine zu der Konkave komplementäre Konvexe ausgebildet ist oder wobei von bzw. an der vorderen Stirnseite eine Konvexe und von bzw. in der hinteren Stirnseite eine zu der Konvexe komplementäre Konkave ausgebildet ist, sodass in Transportrichtung aneinander angrenzende Traversen stirnseitig formschlüssig ineinander eingreifen können, ein(em) erstes(n) Anhängeelement, das am vorlaufenden Endabschnitt der Traverse sich über die Oberseite der Traverse nach oben hin hinaus erstreckend ausgebildet ist und das zum Anhängen an die Transportbahn vorgesehen ist und das z.B. an der Oberseite der Traverse ausgebildet ist, wobei das erste Anhängeelement optional als Hakenelement ausgebildet ist, ein(em) zweites(n) Anhängeelement, das am nachlaufenden Endabschnitt der Traverse sich über die Oberseite der Traverse nach oben hin hinaus erstreckend ausgebildet ist und das zum Anhängen an die Transportbahn vorgesehen ist und das z.B. an der Oberseite der Traverse ausgebildet ist, wobei das zweite Anhängeelement optional als Hakenelement ausgebildet ist, und eine(r) Aufhänge-Einrichtung, die an der Traverse ausgebildet ist, z.B. sich über die Unterseite der Traverse nach unten hin hinaus erstreckend ausgebildet ist und z.B. an der Unterseite der Traverse ausgebildet ist, und zum daran Anhängen des Objekts vorgesehen ist, wobei die Aufhänge-Einrichtung optional zwischen dem ersten und dem zweiten Anhängeelement angeordnet ist und optional als Öse ausgebildet ist.

Die Erfindung stellt ferner bereit eine Zwischenträgereinheit zum hängenden Transport eines Objekts in eine von einer Transportbahn definierten Transportrichtung in einer Hängeförderanlage gemäß Anspruch 5. Die Zwischenträgereinheit ist versehen mit oder besteht aus einem wie in dieser Anmeldung beschriebenen Zwischenträger, einem ersten Rollläufer, welcher entlang der Transportbahn rollend geführt bewegbar ist und welcher aufweist eine erste drehbare Rolle mit einer ersten Rollenachse und einem ersten Aufhängerkorpus, der an der ersten Rollenachse befestigt ist, optional nur einseitig von einer Rollenseite her an der ersten Rollenachse befestigt ist, und der unterhalb der ersten Rolle eine erste Hänge-Öse aufweist, in welche das erste Anhängeelement des Zwischenträgers eingreift, und der einen Mitnahme-Kopfabschnitt aufweist, der oberhalb der ersten Hänge-Öse, optional oberhalb der ersten drehbaren Rolle, derart ausgebildet ist, dass das Mitnehmerelement im Betrieb mit dem Mitnahme-Kopfabschnitt in Eingriff kommt bzw. kommen kann, um den ersten Rollläufer entlang der Transportbahn in die Transportrichtung mitzunehmen, wobei mittels Auslenkens (in Richtung quer zur Transportbahn) (z.B. mittels vertikalen Auslenkens) des Mitnehmerelements der Mitnahme-Kopfabschnitt von dem Mitnehmerelement lösbar/entkuppelbar ist, und einem zweiten Rollläufer, welcher entlang der Transportbahn rollend geführt bewegbar ist und welcher aufweist eine zweite drehbare Rolle mit einer zweiten Rollenachse und einem zweiten Aufhängerkorpus, der an der zweiten Rollenachse befestigt ist, optional nur einseitig von einer Rollenseite her an der zweiten Rollenachse befestigt ist, und der unterhalb der zweiten Rolle eine zweite Hänge-Öse aufweist, in welche das zweite Anhängeelement des Zwischenträgers eingreift, und der einen Löse-Kopfabschnitt aufweist, der oberhalb der zweiten Hänge-Öse, optional oberhalb der zweiten drehbaren Rolle, derart ausgebildet ist, dass das Mitnehmerelement im Betrieb am dem Löse-Kopfabschnitt angreift bzw. angreifen kann, um von dem Löse-Kopfabschnitt ausgelenkt zu werden und um den Löse-Kopfabschnitt zu überstreichen ohne den zweiten Rollläufer (in die Transportrichtung) mitzunehmen.

Die Erfindung stellt ferner bereit eine Hängeförderanlage gemäß Anspruch 10. Die Hängeförderanlage ist versehen mit einer Transportbahn, entlang welcher zu transportierende Objekte in einer Transportrichtung an der Transportbahn hängend transportierbar sind, einer Mitnehmervorrichtung mit einem entlang der Transportbahn bewegbaren sowie quer zur Transportbahn auslenkbaren Mitnehmerelement, und einer wie in dieser Anmeldung beschriebenen Zwischenträgereinheit.

Als ein wie in der vorliegenden Anmeldung beschriebener erster Rollläufer kann z.B. ein wie in der DE 10 2010 000 064 A1 anhand der dortigen Figuren 4-7 beschriebener Rollläufer verwendet werden. Auch der wie in der vorliegenden Anmeldung beschriebene zweite Rollläufer kann, mit Ausnahme des anders aufgebauten Löse-Kopfabschnitts, ansonsten wie der in der DE 10 2010 000 064 A1 anhand der dortigen Figuren 4-7 beschriebene Rollläufer aufgebaut sein.

Die Hängeförderanlage weist z.B. eine Mehrzahl von wie in dieser Anmeldung beschriebenen Zwischenträgereinheiten auf, wobei z.B. die Zwischenträger benachbarter Zwischenträgereinheiten quer zur Transportbahn gesehen im Wesentlichen auf einer Höhe liegen und längs zur Transportbahn gesehen im Wesentlich zueinander fluchten, sodass die Konkaven oder Konvexen an den vorlaufenden Stirnseiten der Zwischenträger in die dazu komplementäre Konvexe bzw. Konkave des jeweils in Transportrichtung gesehen vorausgehenden Zwischenträgers eingreifen können, wodurch z.B. im (Transport- oder Förder-)Betrieb die Seitenstabilität der Zwischenträger bzw. der Zwischenträgereinheiten erhöht ist. Die jeweilige Konkave und die jeweilige Konvexe haben z.B. eine in der horizontalen, also eine von der linken zur rechten Seite der Traverse bzw. des Körpers der Traverse, verlaufende Krümmung, sodass einander benachbarte Traversen bei horizontalen Kurven im Wesentlichen komplett im Eingriff miteinander verbleiben können. Z.B. kann die jeweilige Konkave einen von der Unterseite bis zur Oberseite der Traverse bzw. des Körpers der Traverse durchgehenden Kanal (mit z.B. runden, wie z.B. halbkreisförmigen (Horizontal-)Querschnitt) ausbilden. Entsprechend kann die jeweilige Konvexe z.B. einen von der Unterseite zur Oberseite des Körpers der Traverse durchgehenden Rücken (mit entsprechend der Konkaven z.B. runden, wie z.B. halbkreisförmigen (Horizontal-)Querschnitt) ausbilden.

Die Traverse kann als langgestreckter Körper mit einer sich in Richtung vom vorlaufenden Endabschnitt zum nachlaufenden Endabschnitt bzw. in Transportrichtung erstreckenden Längsrichtung ausgebildet sein. Der Körper der Traverse kann z.B. im Wesentlichen als Quaderkörper ausgebildet sein. Die linke und die rechte Seite des die Traverse ausbildenden Körpers sind z.B. entlang der Transportrichtung gesehen bzw. in Richtung vom vorlaufenden Endabschnitt zum nachlaufenden Endabschnitt gesehen im Wesentlichen geradlinig ausgebildet und z.B. im Wesentlichen von ebenen Flächen gebildet (wobei in den Ebenen z.B. auch Stufen vorkommen können), die sich z.B. im Wesentlichen vertikal erstrecken.

Der Mitnahme-Kopfabschnitt kann z.B. bezüglich der Transportrichtung (bzw. bezüglich einer durch den vorlaufenden und den nachlaufenden Abschnitt gehenden Linie) auf beiden Seiten (linke Seite und rechte Seite) mit einer schräg nach oben und zur jeweiligen anderen Seite hin verlaufenden Schrägfläche versehen sein. Der Löse-Kopfabschnitt kann z.B. bezüglich der Transportrichtung (bzw. bezüglich einer durch den vorlaufenden und den nachlaufenden Abschnitt gehenden Linie) auf beiden Seiten (linke Seite und rechte Seite) mit einer schräg nach oben und zur jeweiligen anderen Seite hin verlaufenden Schrägfläche versehen ist. Die Schrägflächen des Mitnahme-Kopfabschnitts und des Löse-Kopfabschnitts sind z.B. bezüglich der Transportrichtung auf beiden Seiten jeweilig im Wesentlichen zueinander ausgerichtet sind und liegen z.B. im Wesentlichen in einer selben schrägen Ebene, die z.B. parallel zur Transportrichtung bzw. zu einer durch den vorlaufenden und den nachlaufenden Abschnitt gehenden Linie verläuft. Die seitlichen Schrägflächen erlauben ein sanfteres seitliches Einschleusen von Zwischenträgereinheiten über Weichen auf die Transportbahn, wobei dennoch ein sichere Mitnahme über den Mitnahme-Kopfabschnitt bzw. ein sicheres Auslenken des Mitnehmerelements durch den Löse-Kopfabschnitt erzielt werden kann. Das jeweilige Mitnehmerelement hat z.B. beidseitig eine jeweilige bezüglich der Schrägflächen am Mitnahme-Kopfabschnitt/Löse-Kopfabschnitt gleichgerichtete/gleich abgeschrägte seitliche Schräge bzw. Schrägfläche (Richtung der rechten Schrägen des Mitnahme-Kopfabschnitts, des Löse-Kopfabschnitts und des Mitnehmerelements sind gleich, und Richtung der linken Schrägen des Mitnahme-Kopfabschnitts, des Löse-Kopfabschnitts und des Mitnehmerelements sind gleich).

Der jeweilige Löse-Kopfabschnitt erstreckt sich z.B. vertikal weiter über die Transportbahn nach oben hinaus als der jeweilige Mitnahme-Kopfabschnitt, bzw. der (Vertikal-)Abstand zwischen dem oberen Ende des Löse-Kopfabschnitts und dem untersten Punkt (Rollenauflagestelle) der zugeordneten zweiten Rolle ist z.B. größer als der (Vertikal-)Abstand zwischen dem oberen Ende des Mitnahme-Kopfabschnitts und dem untersten Punkt (Rollenauflagestelle) der zugeordneten ersten Rolle. Hierdurch wird besser sichergestellt, dass, bei Auflaufen zweier Zwischenträgereinheiten in Transportrichtung, das Mitnehmerelement der nachlaufenden bzw. der auf eine vordere Zwischenträgereinheit auflaufenden Zwischenträgereinheit von dem Löse-Kopfabschnitt des nachlaufenden Rollläufers der vorausgehenden Zwischenträgereinheit ausreichend ausgelenkt, z.B. vertikal ausgelenkt, wird, um in ausreichend sicherer Weise von dem Mitnahme-Kopfabschnitt des vorlaufenden Rollläufers der nachlaufenden/auflaufenden Zwischenträgereinheit außer Eingriff gebracht zu werden.

Das jeweilige Mitnehmerelement kann ein an einem Mitnehmer bewegbares Element sein, wie z.B. ein vertikal nach unten federvorgespannter Mitnehmerhaken, der vertikal nach oben auslenkbar ist. Das Mitnehmerelement kann auch als insgesamt (quer zur Transportbahn) auslenkbarer (z.B. geführt auslenkbarer und z.B. vertikal auslenkbarer) Mitnehmer ausgebildet sein. Z.B. ist das Mitnehmerelement wie der in der DE 20 2008 007 095 beschriebene Mitnehmer ausgebildet.

Der Mitnahme-Kopfabschnitt ist z.B. an seiner bezüglich der Transportrichtung vorlaufenden Stirnseite mit einer schräg nach hinten und oben geneigten Stirnfläche ausgebildet. Der Löse-Kopfabschnitt ist z.B. an seiner bezüglich der Transportrichtung nachlaufenden Stirnseite mit einer schräg nach vorne und oben geneigten Stirnfläche ausgebildet, wobei optional der Mitnahme-Kopfabschnitt optional in Richtung quer zur Transportrichtung gesehen insgesamt in einer sich schräg nach hinten und oben erstreckenden Hakenform ausgebildet ist, und wobei optional die vorlaufende Stirnfläche des Mitnahme-Kopfabschnitts kleiner, optional maximal halb so groß, als die nachlaufende Stirnseite des Löse-Kopfabschnitts ist. Die größere Fläche des Löse-Kopfabschnitts ermöglicht in sichererer Weise, dass beim Einschleusen einer Zwischenträgereinheit auf die Transportbahn ein Mitnehmer einer unmittelbar auf das Einschleusen auf der Transportbahn ankommenden Zwischenträgereinheit auf den Löse-Kopfabschnitt der eingeschleusten Zwischenträgereinheit aufläuft, um ausgelenkt und damit vom Mitnahme-Kopfabschitt der auf der Transportbahn ankommenden Zwischenträgereinheit gelöst zu werden, um dadurch eine Kollision/Verblockung zu verhindern.

Die Zwischenträgereinheit ist z.B. als Tandemträger(einheit) (wobei sich der Ausdruck Tandem auf den vorlaufenden ersten und den nachlaufenden zweiten Rollläufer bezieht) ausgebildet, bei der in Transportrichtung gesehen zwischen dem ersten und dem zweiten Rollläufer kein weiterer Rollläufer angeordnet ist.

Die Traverse bzw. deren Körper kann z.B. in Richtung vom vorlaufenden Ende zum nachlaufenden Ende bzw. in Transportrichtung eine Länge in einem Bereich von 0,1m bis 4m, z.B. im Bereich von 0,1m bis 0,5m oder z.B. im Bereich von 0,1m bis 1m oder z.B. im Bereich von 0,1m bis 2m oder z.B. im Bereich von 2m bis 4m haben. Es kann z.B. zwischen dem ersten Rollläufer und dem zweiten Rollläufer, z.B. bei längeren Traversen, ein dritter Rollläufer vorgesehen sein, welcher zum Erlauben einer Kurvenfahrt der Traverse z.B. ein quer zur Transportbahn auslenkbares Ösen-Element, an welches ein an der Traverse ausgebildetes drittes Anhängeelement eingehängt ist, oder ein Ösen-Element aufweist, dass mit einer sich quer zur Transportbahn erstreckenden Bewegungsbahn für das dritte Anhängeelement ausgestattet ist. Indem die Traverse z.B. einfach mit unterschiedlichen Größen (z.B. Längen) bereitgestellt werden kann, können daran die unterschiedlichsten Anhänge-Einrichtungen vorgesehen/angebracht werden, sodass die Hängeförderanlage einfacher an unterschiedliche zu transportierende Gegenstände adaptierbar ist.

Der erste Rollläufer hat z.B. ein vorlaufendes Stirnende, das quer zur Transportrichtung gesehen im Wesentlichen zur Krümmungsspitze der Konvexe oder zur Krümmungssohle der Konkave der vorderen Stirnseite der Traverse des Zwischenträgers fluchtet bzw. ausgerichtet ist, wobei optional das vorlaufende Stirnende des ersten Rollläufers als ebene Stirnfläche ausgebildet ist, welche sich optional senkrecht zur Transportrichtung erstreckt (bei horizontal verlaufender Transportbahn ). Der zweite Rollläufer hat z.B. ein nachlaufendes Stirnende, das quer zur Transportrichtung gesehen im Wesentlichen zur Krümmungssohle der Konkaven oder zur Krümmungsspitze der Konvexen der hinteren Stirnseite der Traverse des Zwischenträgers fluchtet bzw. ausgerichtet ist, wobei optional das nachlaufende Stirnende des zweiten Rollläufers als ebene Stirnfläche ausgebildet ist, welche sich optional senkrecht zur Transportrichtung erstreckt (bei horizontal verlaufender Transportbahn).

Das erste und/oder das zweite Anhängeelement sind zum Beispiel jeweils als Hakenelement ausgebildet, das sich z.B. in Richtung quer zur Transportrichtung erstreckt. Die erste Hänge-Öse und/oder die zweite Hänge-Öse sind z.B. als geschlossene Öse ausgebildet und die Öffnungsfläche der ersten Hänge-Öse und/oder der zweiten Hänge-Öse erstrecken sich z.B. parallel zur Transportrichtung. Das erste und/oder das zweite Anhängeelement sind z.B. an der Oberseite der Traverse bzw. des Körpers der Traverse ausgebildet. Die erste Hänge-Öse ist z.B. vertikal fluchtend unter der ersten Rolle angeordnet, und die zweite Hänge-Öse ist z.B. vertikal fluchtend unter der zweiten Rolle angeordnet.

Die Aufhänge-Einrichtung ist z.B. an der Unterseite der Traverse bzw. des Körpers der Traverse ausgebildet und ist z.B. in der Draufsicht gesehen (auf die Oberseite der Traverse schauend) auf einer durch die erste Rolle und die zweite Rolle verlaufenden Linie angeordnet. Die Aufhänge-Einrichtung kann z.B. ein langgestreckter, z.B. parallel zur Traverse in einem Vertikalabstand unter der Traverse verlaufender Balken sein, der z.B. in Form einer schmalen Leiste ausgebildet ist, auf welche z.B. Kleiderbügel mit deren Hakenteilen in Längsrichtung aufschiebbar sind. Die Aufhänge-Einrichtung kann eine einzelne/einzige oder mehrere Ösen aufweisen oder davon gebildet sein. Die Aufhänge-Einrichtung kann auch eine Einrichtung zum daran Anbringen einer RFID-Tag-Vorrichtung aufweisen/sein.

Die Erfindung wird nachfolgend anhand von Ausführungsformen mit Bezug auf die angehängten Figuren weiter erläutert. In den Figuren werden für gleiche Bauteile die gleichen Bezugszeichen verwendet.

Figuren 1a bis 1e zeigen schematisch eine Hängeförderanlage mit Zwischenträgereinheiten gemäß einer Ausführungsform der Erfindung in Seitenansicht (1a), Draufsicht (1b), Querschnittansicht von vorn (1c), Querschnittansicht von hinten (1d) und perspektivischer Ansicht (1e).

Figur 1f zeigt schematisch einen Löse-Kopfabschnitt eines jeweiligen zweiten Rollläufers gemäß einer anderen Ausführungsform.

Figur 2 zeigt eine Hängeförderanlage mit Zwischenträgereinheiten gemäß einer anderen Ausführungsform der Erfindung in Seitenansicht.

Figur 3 zeigt eine Hängeförderanlage mit Zwischenträgereinheiten gemäß noch einer anderen Ausführungsform der Erfindung in Seitenansicht.

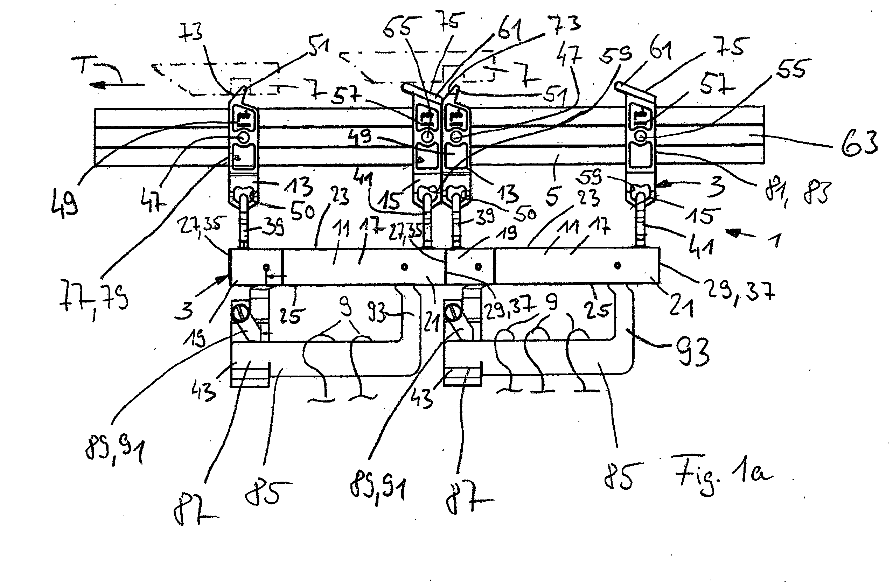

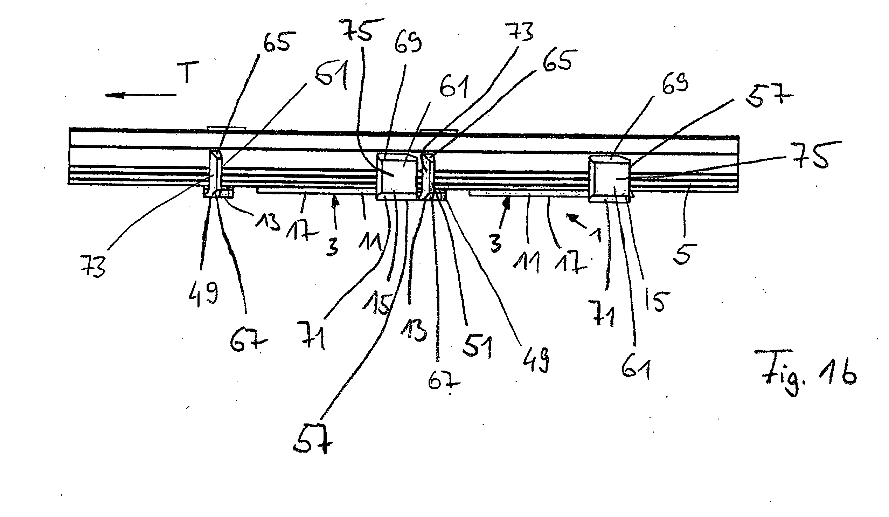

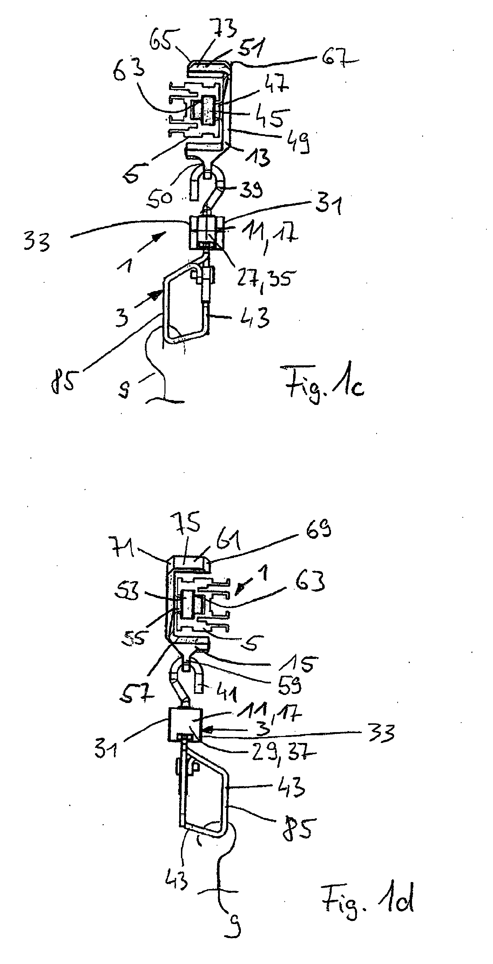

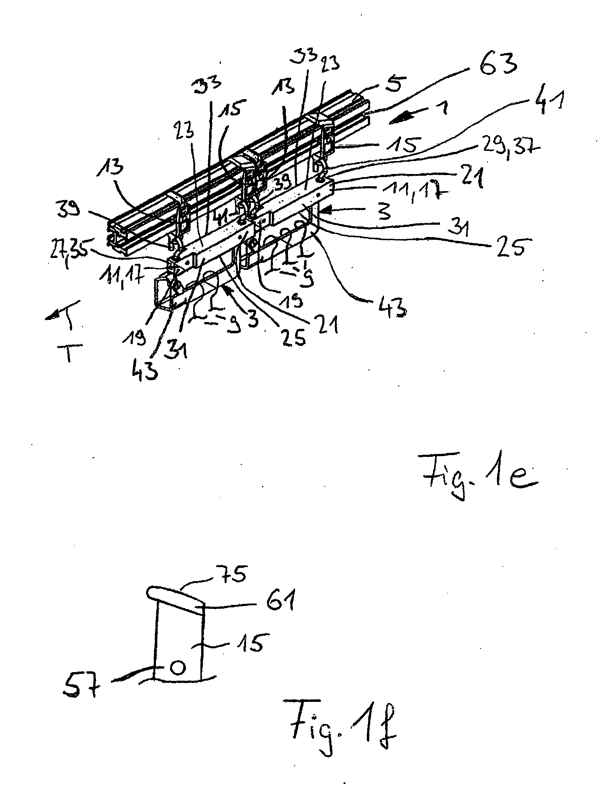

Die in den Figuren 1a-1e gezeigte Hängeförderanlage 1 weist auf eine Mehrzahl von Zwischenträgereinheiten 3, eine Transportbahn (oder Führungsbahn) 5 in Form einer Profilschiene, entlang welcher Transportbahn 5 die Zwischenträgereinheiten 3 geführt in eine Transportrichtung T bewegbar sind, und eine Mehrzahl von Mitnehmerelementen 7, welche mit den Zwischenträgereinheiten 3 in Eingriff kommen können, um die Zwischenträgereinheiten 3 in die Transportrichtung T (z.B. ziehend) mitzunehmen und welche ihrerseits über eine (nicht dargestellte) Antriebsvorrichtung, z.B. einen Umlauf-Kettenantrieb, umlaufend angetrieben bewegt sind bzw. bewegbar sind und welche ferner durch Auslenken in Richtung quer zur Transportbahn 5 (z.B. durch vertikales Auslenken) von dem Eingriff mit den Zwischenträgereinheiten 3 lösbar sind. (Z.B. sind die Mitnehmerelemente 7 in Form der in der DE 20 2008 007 095 beschriebenen Mitnehmer ausgebildet). An der jeweiligen Zwischenträgereinheit 3 sind z.B. ein oder mehrere in bzw. von der Hängeförderanlage 1 hängend zu transportierende Objekte 9 anhängbar.

Die jeweilige Zwischenträgereinheit 3 ist als Tandemträgereinheit ausgebildet und weist auf oder besteht aus einem Zwischenträger 11, einem ersten Rollläufer 13 und einem zweiten Rollläufer 15.

Der Zwischenträger 11 zum hängenden Transport des Objekts 9 in der von der Transportbahn 5 definierten Transportrichtung T in der Hängeförderanlage 1 weist auf (oder besteht aus) eine(r) Traverse 17 mit bezüglich der Transportrichtung T einem vorlaufenden Endabschnitt 19 und einem nachlaufenden Endabschnitt 21, wobei die Traverse 17 als ein insgesamt (und in sich) starrer Körper, hier ein langgestreckter im Wesentlichen quaderförmiger Körper, mit einer Oberseite 23, einer Unterseite 25, einer am vorlaufenden Endabschnitt 19 ausgebildeten vorderen Stirnseite 27, einer am nachlaufenden Endabschnitt 21 ausgebildeten hinteren Stirnseite 29 sowie einer linken und einer rechten Seite 31, 33, die sich zwischen der Oberseite 23, der Unterseite 25, der vorderen und der hinteren Stirnseite 27, 29 erstrecken, ausgebildet ist, wobei in der vorderen Stirnseite 27 eine Konvexe 35 und in der hinteren Stirnseite 29 eine zu der Konvexe (im Wesentlichen) komplementäre Konkave 37 ausgebildet ist (oder wobei (nicht dargestellt) in der vorderen Stirnseite 27 eine Konkave und in der hinteren Stirnseite 29 eine zu der Konkave komplementäre Konvexe ausgebildet ist), sodass in Transportrichtung T aneinander angrenzende Traversen 17 stirnseitig formschlüssig ineinander eingreifen bzw. eingreifen können, ein(em) erstes(n) Anhängeelement 39, das am vorlaufenden Endabschnitt 19 der Traverse 17 auf der Oberseite 23 befestigt bzw. fest ausgebildet ist und sich über die Oberseite 23 der Traverse 17 nach oben hin hinaus erstreckt und das zum Anhängen an die Transportbahn vorgesehen 5 ist, wobei das erste Anhängeelement 39 hier als Hakenelement ausgebildet ist, ein(em) zweites(n) Anhängeelement 41, das am nachlaufenden Endabschnitt 21 der Traverse 17 an der Oberseite 23 der Traverse 17 befestigt bzw. fest ausgebildet ist und sich über die Oberseite 23 der Traverse 17 nach oben hin hinaus erstreckend ausgebildet ist und das zum Anhängen an die Transportbahn 5 vorgesehen ist, wobei das zweite Anhängeelement 41 hier als Hakenelement ausgebildet ist, und eine(r) Aufhänge-Einrichtung 43, die an der Traverse 17 angebracht ist und zwar hier an der Unterseite 25 der Traverse 17 fest angebracht ist und sich hier über die Unterseite 25 der Traverse 17 nach unten hin hinaus erstreckend ausgebildet ist und zum daran Anhängen des Objekts 9 oder der Objekte 9 vorgesehen ist, wobei die Aufhänge-Einrichtung 43 hier zwischen dem ersten und dem zweiten Anhängeelement 39, 41 angeordnet ist und hier ferner in Form einer Öse, hier einer geschlossenen Öse, ausgebildet ist.

Der erste Rollläufer 13 ist entlang der Transportbahn 5 rollend geführt bewegbar und weist auf (oder besteht aus) eine(r) erste(n) drehbare(n) Rolle 45 mit einer ersten Rollenachse 47, und einen(m) ersten Aufhängerkorpus 49, der an der ersten Rollenachse 47 befestigt ist, hier nur einseitig von einer Rollenseite her an der ersten Rollenachse 47 befestigt ist, und der unterhalb der ersten Rolle 45 eine erste Hänge-Öse 50 aufweist, in welche das erste Anhängeelement 39 des Zwischenträgers 11 eingreift, und der einen Mitnahme-Kopfabschnitt 51 aufweist, der oberhalb der ersten Hänge-Öse 50, hier oberhalb der ersten drehbaren Rolle 45, derart ausgebildet ist, dass das Mitnehmerelement 7 im (Transport/Förder-)Betrieb mit dem Mitnahme-Kopfabschnitt 51 in Eingriff kommt/kommen kann, um den ersten Rollläufer 13 entlang der Transportbahn 5 in die Transportrichtung T mitzunehmen, wobei mittels Auslenkens des Mitnehmerelements 7 quer zur Transportbahn 5, hier mittels vertikalen Auslenkens, der Mitnahme-Kopfabschnitt 51 von dem Mitnehmerelement 7 lösbar/entkuppelbar ist.

Der zweite Rollläufer 15 ist entlang der Transportbahn 5 rollend geführt bewegbar und weist auf (oder besteht aus) eine(r) zweite(n) drehbare(n) Rolle 53 mit einer zweiten Rollenachse 55, und einen(m) zweiten Aufhängerkorpus 57, der an der zweiten Rollenachse 55 befestigt ist, hier nur einseitig von einer Rollenseite her an der zweiten Rollenachse 55 befestigt ist, und der unterhalb der zweiten Rolle 53 eine zweite Hänge-Öse 59 aufweist, in welche das zweite Anhängeelement 41 des Zwischenträgers 11 eingreift, und der einen Löse-Kopfabschnitt 61 aufweist, der oberhalb der zweiten Hänge-Öse 59, hier oberhalb der zweiten drehbaren Rolle 53, derart ausgebildet ist, dass das Mitnehmerelement 7 im (Transport/Förder-)Betrieb an dem Löse-Kopfabschnitt 61 angreift, um von dem Löse-Kopfabschnitt 61 in Richtung quer zur Transportbahn 5 ausgelenkt zu werden, hier vertikal nach oben ausgelenkt zu werden, und um den Löse-Kopfabschnitt 61 zu überstreichen, ohne den zweiten Rollläufer 15 mitzunehmen.

Die Transportbahn 5 bzw. die Schiene, von welcher die Transportbahn 5 gebildet ist, weist einen sich in Transportrichtung T erstreckenden, seitlichen Führungskanal 63 auf, in welchem die jeweilige erste Rolle 45 und die jeweilige zweite Rolle 53 aufgenommen sind, und zwar derart, dass sie jeweils beidseitig von einer seitlichen Kanalwand gegen ein seitliches Verkippen abgestützt sind.

Der Mitnahme-Kopfabschnitt 51 des ersten Aufhängerkorpus 49 des jeweiligen ersten Rollläufers 13 ist bezüglich der Transportrichtung T auf beiden Seiten mit einer schräg nach oben und zur jeweiligen anderen Seiten hin verlaufenden Schrägfläche 65, 67 (rechte Schrägfläche 65 und linke Schrägfläche 67) versehen, und der Löse-Kopfabschnitt 61 des Aufhängerkorpus 57 des jeweiligen zweiten Rollläufers 15 ist bezüglich der Transportrichtung T auf beiden Seiten mit einer schräg nach oben und zur jeweiligen anderen Seite hin verlaufenden Schrägfläche 69, 71 versehen, wobei hier die Schrägflächen 65, 67 bzw. 69, 71 des Mitnahme-Kopfabschnitts 51 und des Löse-Kopfabschnitts 61 bezüglich der Transportrichtung T auf beiden Seiten jeweilig im Wesentlichen zueinander ausgerichtet sind sowie hier im Wesentlichen in einer (jeweils) selben (linksseitigen bzw. rechtsseitigen) schrägen Ebene liegen.

Der Mitnahme-Kopfabschnitt 51 des Aufhängerkorpus 49 des jeweiligen ersten Rollläufers 13 ist an seiner bezüglich der Transportrichtung T vorlaufenden Stirnseite mit einer schräg nach hinten und oben geneigten Stirnfläche 73 ausgebildet, und der Löse-Kopfabschnitt 61 des Aufhängerkorpus 57 des jeweiligen zweiten Rollläufers 15 ist an seiner bezüglich der Transportrichtung T nachlaufenden Stirnseite mit einer schräg nach vorne und oben geneigten Stirnfläche 75 ausgebildet, wobei hier der Mitnahme-Kopfabschnitt 51 des Aufhängerkorpus 49 des jeweiligen ersten Rollläufers 13, in Richtung quer zur Transportrichtung T gesehen, insgesamt in einer sich schräg nach hinten und oben erstreckenden Hakenform ausgebildet ist, und wobei hier die vorlaufende Stirnfläche 73 des jeweiligen Mitnahme-Kopfabschnitts weniger als halb so groß wie die nachlaufende Stirnfläche 75 des jeweiligen Löse-Kopfabschnitts 61 ist.

Die nach vorne und oben geneigte Stirnfläche 75 an der nachlaufenden Stirnseite des Löse-Kopfabschnitts 61 des zweiten Rollläufers 15 bzw. dessen Aufhängerkorpus 57 kann z.B. eben ausgebildet sein (vgl. Ausführungsform von Figuren 1a-1e). Die nach vorne und oben geneigte Stirnfläche 75 an der nachlaufenden Stirnseite des Löse-Kopfabschnitts 61 des zweiten Rollläufers 15 bzw. dessen Aufhängerkorpus 57 kann aber auch (nach außen hin) gekrümmt bzw. konvex ausgebildet sein bzw. mit einer Konvexen versehen sein (vgl. Ausführungsform von Figur 1f). Die Konvexe kann z.B. nur in Transportrichtung T bzw. Transportbahnrichtung verlaufend ausgebildet sein, wobei die Stirnfläche 75 in Richtung quer zur Transportrichtung T gerade/geradlinig ausgebildet sein kann. Die Konvexe kann auch in alle Richtungen ausgebildet sein, sodass die Stirnfläche 75 eine Kalottenform z.B. eine Kugelkalottenform hat.

Der jeweilige erste Rollläufer 13, bzw. der Aufhängerkorpus 49 des jeweiligen ersten Rollläufers 13, hat ein vorlaufendes Stirnende 77, hier als ebene Stirnfläche 79 ausgebildet, das quer zur Transportrichtung T gesehen im Wesentlichen zur Krümmungsspitze der Konvexe 35 der vorderen Stirnseite 27 der zugehörigen Traverse 17 (bzw. deren Körper) fluchtet, wobei sich hier die ebene Stirnfläche 79 des jeweiligen ersten Rollläufers 13 (bzw. dessen Aufhängerkorpus 49) im Wesentlichen senkrecht zur Transportrichtung T bzw. zur Transportbahn 5 erstreckt (bei horizontal verlaufender Transportbahn 5), und der jeweilige zweite Rollläufer 15, bzw. der Aufhängerkorpus 57 des jeweiligen zweiten Rollläufers 15, hat ein nachlaufendes Stirnende 81, hier als ebene Stirnfläche 83 ausgebildet, das quer zur Transportrichtung T gesehen im Wesentlichen zur Krümmungssohle der Konkaven 37 der hinteren Stirnseite 29 der zugehörigen Traverse 17 (bzw. deren Körper) fluchtet, wobei die ebene Stirnfläche 83 des jeweiligen zweiten Rollläufers 15 (bzw. dessen Aufhängerkorpus 57) im Wesentlichen senkrecht zur Transportrichtung T bzw. zur Transportbahn 5 erstreckt (bei horizontal verlaufender Transportbahn 5).

Die jeweilige Konkave 29 bildet einen von der Unterseite 25 bis zur Oberseite 23 der jeweiligen Traverse 17 bzw. des Körpers der jeweiligen Traverse 17 durchgehenden, hier gerade sowie senkrecht zur Transportrichtung T bzw. zur Transportbahn 5 (bei horizontal verlaufender Transportbahn 5) durchgehenden, Kanal aus, wobei die Krümmung der jeweiligen Konkave 29 bei sich horizontal erstreckender Traverse 17 in der Horizontalen verläuft. Die jeweilige Konvexe 27 bildet entsprechend einen von der Unterseite 25 bis zur Oberseite 23 der jeweiligen Traverse 17 durchgehenden, hier gerade sowie senkrecht zur Transportrichtung T bzw. zur Transportbahn 5 (bei horizontal verlaufender Transportbahn 5) durchgehenden, (Berg-)Rücken aus, wobei die Krümmung der jeweiligen Konvexen 27 bei sich horizontal erstreckender Traverse 17 in der Horizontalen verläuft.

Die (in Transportrichtung T gesehen) linke und die rechte Seite 31, 33 der Traverse 17 bzw. des die Traverse 17 ausbildenden Körpers sind entlang der Transportrichtung T bzw. entlang der Transportbahn 5 gesehen jeweils im Wesentlichen geradlinig ausgebildet, hier als im Wesentlichen ebene Flächen ausgebildet, und die obere und die untere Seite 23, 25 der Traverse 17 bzw. des die Traverse 17 ausbildenden Körpers sind entlang der Transportrichtung T bzw. entlang der Transportbahn 5 gesehen jeweils im Wesentlichen geradlinig ausgebildet, hier als im Wesentlichen ebene Flächen ausgebildet.

Die Aufhänge-Einrichtung 43 ist hier als ein in Transportrichtung T bzw. in Richtung der Transportbahn 5 sich erstreckender, langgestreckter, schmaler Balken 85 ausgebildet, an welchem die in Form von Kleiderbügeln ausgebildeten Objekte 9 angehängt sind. Die Aufhänge-Einrichtung 43 weist ferner am vorlaufenden Endabschnitt 87 des Balkens 85 eine Verriegelungsvorrichtung 89 mit einem Sperrriegel 91 auf, von welchem verhindert wird, dass die Objekte von dem Balken 85 gelangen können. Wie aus Figur 1a ersichtlich ist, ist der Balken 85 unter Ausbildung einer durch den Sperrriegel 91 geschlossenen Anhänge-Öse an seinen beiden Endabschnitten 87, 93 nach oben hin mit der Traverse 17 fest verbunden. Der Sperrriegel 91 ist nach hinten hin verschwenkbar, sodass die Objekte 9 bei nach hinten geschwenktem Sperrriegel 91 nach vorne hin von dem Balken 85 entnehmbar sind.

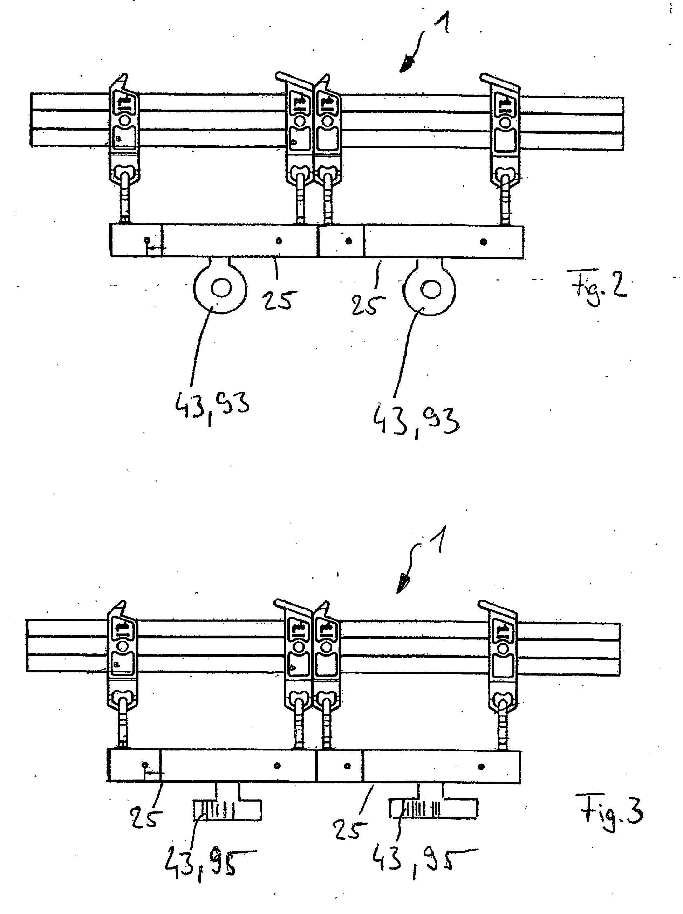

Die Figuren 2 und 3 zeigen jeweils weitere Ausführungsformen einer erfindungsgemäßen Hängeförderanlage 1, welche im Wesentlichen wie die anhand der Figuren 1a-1e erläuterte Hängeförderanlage 1 ausgebildet ist und sich von jener nur durch die Art der Aufhänge-Einrichtung 43 unterscheidet.

Bei der in Figur 2 gezeigten Hängeförderanlage 1 ist die Aufhänge-Einrichtung 43 von einem an der Unterseite 25 der Traverse 17 des jeweiligen Zwischenträgers 11 befestigten Ösen-Ring 93 gebildet.

Bei der in Figur 3 gezeigten Hängeförderanlage 1 ist die Aufhänge-Einrichtung 43 von einer an der Unterseite 25 der Traverse 17 des jeweiligen Zwischenträgers 11 fest angebrachten RFID-Tag-Vorrichtung 95 mit einem RFID-Tag gebildet, an welcher z.B. eine nicht dargestellte Bedientastatur anbringbar ist.

## Patentansprüche

1. Zwischenträger (11) zum hängenden Transport eines Objekts (9) in eine von einer Transportbahn (5) definierten Transportrichtung (T) in einer Hängeförderanlage (1), mit oder bestehend aus
einer Traverse (17) mit bezüglich der Transportrichtung (T) einem vorlaufenden Endabschnitt (19) und einem nachlaufenden Endabschnitt (21), wobei die Traverse (17) als ein insgesamt starrer Körper mit einer Oberseite (23), einer Unterseite (25), einer am vorlaufenden Endabschnitt (19) ausgebildeten vorderen Stirnseite (27), einer am nachlaufenden Endabschnitt (23) ausgebildeten hinteren Stirnseite (29) sowie einer linken und einer rechten Seite (31, 33), die sich zwischen der Oberseite (23), der Unterseite (25), der vorderen und der hinteren Stirnseite (27, 29) erstrecken, ausgebildet ist, wobei von der vorderen Stirnseite (27) eine Konvexe (35) und von der hinteren Stirnseite (29) eine zu der Konvexe (25) komplementäre Konkave (37) ausgebildet ist oder wobei von der vorderen Stirnseite (27) eine Konkave und von der hinteren Stirnseite (29) eine zu der Konkave komplementäre Konvexe ausgebildet ist, sodass in Transportrichtung (T) aneinander angrenzende Traversen (17) stirnseitig formschlüssig ineinander eingreifen können,
einem ersten Anhängeelement (39), das am vorlaufenden Endabschnitt (19) der Traverse (17) sich über die Oberseite (23) der Traverse (17) nach oben hin hinaus erstreckend ausgebildet ist und das zum Anhängen an die Transportbahn (5) vorgesehen ist, wobei das erste Anhängeelement (39) optional als Hakenelement ausgebildet ist,
einem zweiten Anhängeelement (41), das am nachlaufenden Endabschnitt (21) der Traverse (17) sich über die Oberseite (23) der Traverse (17) nach oben hin hinaus erstreckend ausgebildet ist und das zum Anhängen an die Transportbahn (5) vorgesehen ist, wobei das zweite Anhängeelement (29) optional als Hakenelement ausgebildet ist, und
einer Aufhänge-Einrichtung (43), die an der Traverse (17) ausgebildet ist, optional sich über die Unterseite (25) der Traverse nach unten hin hinaus erstreckend ausgebildet ist, und zum daran Anhängen des Objekts (9) vorgesehen ist, wobei die Aufhänge-Einrichtung (43) optional zwischen dem ersten und dem zweiten Anhängeelement (39, 41) angeordnet ist und optional in Form einer Öse ausgebildet ist.

2. Zwischenträger (11) gemäß Anspruch 1, wobei die Traverse (17) als langgestreckter Körper mit einer sich in Richtung vom vorlaufenden Endabschnitt (19) zum nachlaufenden Endabschnitt (21) erstreckenden Längsrichtung ausgebildet ist.

3. Zwischenträger (11) gemäß einem der Ansprüche 1 und 2, wobei die jeweilige Konkave (37) einen von der Unterseite (25) bis zur Oberseite (23) durchgehenden Kanal ausbildet.

4. Zwischenträger (11) gemäß einem der Ansprüche 1 bis 3, wobei die linke und die rechte Seite (31, 33) des die Traverse (17) ausbildenden Körpers in Richtung vom vorlaufenden Endabschnitt (19) zum nachlaufenden Endabschnitt (21) gesehen jeweils im Wesentlichen geradlinig ausgebildet sind.

5. Zwischenträgereinheit (3) zum hängenden Transport eines Objekts (9) in eine von einer Transportbahn (5) definierten Transportrichtung (T) in einer Hängeförderanlage (1), mit oder bestehend aus
einem Zwischenträger (11) gemäß einem der Ansprüche 1 bis 4,
einem ersten Rollläufer (13), welcher entlang der Transportbahn (5) rollend geführt bewegbar ist und welcher aufweist eine erste drehbare Rolle (45) mit einer ersten Rollenachse (47) und einem ersten Aufhängerkorpus (49), der an der ersten Rollenachse (47) befestigt ist, optional nur einseitig von einer Rollenseite her an der ersten Rollenachse (47) befestigt ist, und der unterhalb der ersten Rolle (45) eine erste Hänge-Öse aufweist (50), in welche das erste Anhängeelement (39) des Zwischenträgers (11) eingreift, und der einen Mitnahme-Kopfabschnitt (51) aufweist, der oberhalb der ersten Hänge-Öse (50), optional oberhalb der ersten drehbaren Rolle (45), derart ausgebildet ist, dass ein Mitnehmerelement (7) im Betrieb mit dem Mitnahme-Kopfabschnitt in Eingriff kommen kann, um den ersten Rollläufer (13) entlang der Transportbahn (5) in die Transportrichtung (T) mitzunehmen, wobei mittels Auslenkens des Mitnehmerelements (7) der Mitnahme-Kopfabschnitt (51) von dem Mitnehmerelement (7) lösbar ist, und
einem zweiten Rollläufer (15), welcher entlang der Transportbahn (5) rollend geführt bewegbar ist und welcher aufweist eine zweite drehbare Rolle (53) mit einer zweiten Rollenachse (55) und einem zweiten Aufhängerkorpus (57), der an der zweiten Rollenachse (55) befestigt ist, optional nur einseitig von einer Rollenseite her an der zweiten Rollenachse (55) befestigt ist, und der unterhalb der zweiten Rolle (53) eine zweite Hänge-Öse (59) aufweist, in welche das zweite Anhängeelement (41) des Zwischenträgers (11) eingreift, und der einen Löse-Kopfabschnitt (61) aufweist, der oberhalb der zweiten Hänge-Öse (59), optional oberhalb der zweiten drehbaren Rolle (53), derart ausgebildet ist, dass das Mitnehmerelement (7) im Betrieb am dem Löse-Kopfabschnitt (61) angreifen kann, um von dem Löse-Kopfabschnitt (61) ausgelenkt zu werden und um den Löse-Kopfabschnitt (61) zu überstreichen ohne den zweiten Rollläufer (15) mitzunehmen.

6. Zwischenträgereinheit (3) gemäß Anspruch 5, wobei der Mitnahme-Kopfabschnitt (61) bezüglich der Transportrichtung (T) auf beiden Seiten mit einer schräg nach oben und zur jeweiligen anderen Seite hin verlaufenden Schrägfläche (65, 67) versehen ist, und/oder wobei der Löse-Kopfabschnitt (61) bezüglich der Transportrichtung (T) auf beiden Seiten mit einer schräg nach oben und zur jeweiligen anderen Seite hin verlaufenden Schrägfläche (69, 71) versehen ist, wobei optional die Schrägflächen (65, 67 bzw. 69, 71) des Mitnahme-Kopfabschnitts (51) und des Löse-Kopfabschnitts (61) bezüglich der Transportrichtung (T) auf beiden Seiten jeweilig im Wesentlichen zueinander ausgerichtet sind, optional im Wesentlichen in einer selben schrägen Ebene liegen.

7. Zwischenträgereinheit (3) gemäß Anspruch 5 oder 6, wobei der Mitnahme-Kopfabschnitt (51) an seiner bezüglich der Transportrichtung (T) vorlaufenden Stirnseite mit einer schräg nach hinten und oben geneigten Stirnfläche (73) ausgebildet ist, und/oder wobei der Löse-Kopfabschnitt (61) an seiner bezüglich der Transportrichtung (T) nachlaufenden Stirnseite mit einer schräg nach vorne und oben geneigten Stirnfläche (75) ausgebildet ist, wobei optional der Mitnahme-Kopfabschnitt (51), in Richtung quer zur Transportrichtung (T) gesehen, insgesamt in einer sich schräg nach hinten und oben erstreckenden Hakenform ausgebildet ist, und wobei optional die vorlaufende Stirnfläche (73) des Mitnahme-Kopfabschnitts (51) kleiner, optional maximal halb so groß, als die nachlaufende Stirnfläche (75) des Löse-Kopfabschnitts (61) ist.

8. Zwischenträgereinheit (3) gemäß einem der Ansprüche 5 bis 7, wobei die Zwischenträgereinheit (3) als Tandemträger ausgebildet ist, bei der in Transportrichtung (T) gesehen zwischen dem ersten und dem zweiten Rollläufer (13, 15) kein weiterer Rollläufer angeordnet ist.

9. Zwischenträgereinheit (3) gemäß einem der Ansprüche 5 bis 8, wobei der erste Rollläufer (13) ein vorlaufendes Stirnende (77) hat, das quer zur Transportrichtung (T) gesehen im Wesentlichen zur Krümmungsspitze der Konvexe (35) oder zur Krümmungssohle der Konkave der vorderen Stirnseite (27) der Traverse (11) fluchtet, wobei optional das vorlaufende Stirnende (77) des ersten Rollläufers als ebene Stirnfläche (59) ausgebildet ist, welche sich optional senkrecht zur Transportrichtung (T) erstreckt, und/oder wobei der zweite Rollläufer (15) ein nachlaufendes Stirnende (81) hat, das quer zur Transportrichtung (T) gesehen im Wesentlichen zur Krümmungssohle der Konkaven (37) oder zur Krümmungsspitze der Konvexen der hinteren Stirnseite (29) der Traverse (17) fluchtet, wobei optional das nachlaufende Stirnende (81) des zweiten Rollläufers (15) als ebene Stirnfläche (83) ausgebildet ist, welche sich optional senkrecht zur Transportrichtung (T) erstreckt.

10. Hängeförderanlage (1) mit
einer Transportbahn (5), entlang welcher zu transportierende Objekte (9) in einer Transportrichtung (T) an der Transportbahn (5) hängend transportierbar sind,
einer Mitnehmervorrichtung mit einem entlang der Transportbahn (5) bewegbaren sowie quer zur Transportbahn (5) auslenkbaren Mitnehmerelement (7), und
einer Zwischenträgereinheit (3) gemäß einem der Ansprüche 5 bis 9.

## Claims

1. Subcarrier (11) for the hanging transport of an object (9) into a direction of transport (T) defined by a transportation track (5) in a suspended conveyor system (1), having or consisting of:
a traverse (17) having a leading end portion (19) and a trailing end portion (21) relative to the direction of transport (T), wherein the traverse (17) is formed as an altogether rigid body having an upper side (23), a lower side (25), a front face (27) formed on the leading end portion (19), a rear face (29) formed on the trailing end portion (23), and a left and right sides (31, 33) extending between the upper side (23), the lower side (25), the front and rear faces (27, 29), wherein a convex (35) is formed by the front face (27) and a concave (37) complementary to the convex (25) is formed by the rear face (29), or wherein a concave is formed by the front face (27) and a convex complementary to the concave is formed by the rear face (29), so that traverses (17) abutting against each other in the direction of transport (T) can engage with each other in a form-fit way on the face side,
a first suspension member (39) formed at the leading end portion (19) of the traverse (17) in a manner so as to extend upwards beyond the upper side (23) of the traverse (17) and provided for suspending to the transportation track (5), wherein the first suspension member (39) is optionally formed as a hook member,
a second suspension member (41) formed at the trailing end portion (21) of the traverse (17) in a manner so as to extend upwards beyond the upper side (23) of the traverse (17) and provided for suspending to the transportation track (5), wherein the second suspension member (29) is optionally formed as a hook member, and
a suspension device (43) formed on the traverse (17), optionally formed in a manner so as to extend downwards beyond the lower side (25) of the traverse, and provided for suspending the object (9) thereto, wherein the suspension device (43) is optionally arranged between the first and second suspension members (39, 41) and is optionally formed in the form of an eyelet.

2. Subcarrier (11) according to claim 1, wherein the traverse (17) is formed as an elongate body having a longitudinal direction extending in the direction from the leading end portion (19) to the trailing end portion (21).

3. Subcarrier (11) according to any of claims 1 and 2, wherein the respective concave (37) forms a channel passing from the lower side (25) to the upper side (23).

4. Subcarrier (11) according to any of claims 1 to 3, wherein the left and right sides (31, 33) of the body forming the traverse (17) are each formed to be substantially straight when seen in a direction from the leading end portion (19) to the trailing end portion (21).

5. Subcarrier unit (3) for the hanging transport of an object (9) into a direction of transport (T) defined by a transportation track (5) in a suspended conveyor system (1), having or consisting of:
a subcarrier (11) according to any of claims 1 to 4,
a first roller runner (13) movable along the transportation track (5) in a rollingly guided manner and comprising a first rotatable roller (45) having a first roller axis (47) and a first suspension body (49) fixed to the first roller axis (47), optionally fixed to the first roller axis (47) only on one side from the roller side, and comprising a first suspension eyelet (50) under the first roller (45), with which the first suspension member (39) of the subcarrier (11) is engaged, and comprising a catching head portion (51) which is formed above the first suspension eyelet (50), optionally above the first rotatable roller (45) in such a way that a catch member (7) can be engaged with the catching head portion in operation, so as to carry along the first roller runner (13) along the transportation track (5) into the direction of transport (T), wherein the catching head portion (51) can be released from the catch member (7) by means of deflecting the catch member (7), and
a second roller runner (15) movable along the transportation track (5) in a rollingly guided manner and comprising a second rotatable roller (53) having a second roller axis (55) and a second suspension body (57) fixed to the second roller axis (55), optionally fixed to the second roller axis (55) only on one side from a roller side, and comprising under the second roller (53) a second suspension eyelet (59) with which the second suspension member (41) of the subcarrier (11) is engaged, and comprising a release head portion (61) formed above the second suspension eyelet (59), optionally above the second rotatable roller (53) in such a way that the catch member (7) can be engaged with the release head portion (61) in operation, so as to be deflected from the release head portion (61) and so as to brush over the release head portion (61) without taking along the second roller runner (15).

6. Subcarrier unit (3) according to claim 5, wherein the catching head portion (61) is provided on both sides with a slant (65, 67) extending obliquely upwards and towards the respective other side relative to the direction of transport (T), and/or wherein the release head portion (61) is provided on both sides with a slant (69, 71) extending obliquely upwards and towards the respective other side relative to the direction of transport (T), wherein optionally the slants (65, 67 and 69, 71, respectively) of the catching head portion (51) and of the release head portion (61) are each substantially aligned on both sides relative to the direction of transport (T), optionally substantially lie in a same inclined plane.

7. Subcarrier unit (3) according to claim 5 or 6,
wherein the catching head portion (51) is formed with a front surface (73) inclined obliquely rearwards and upwards on its leading face with respect to the direction of transport (T), and/or wherein the release head portion (61) is formed with a front surface (75) inclined obliquely forward and upwards on its trailing face with respect to the direction of transport (T), wherein optionally the catching head portion (51), when seen in a direction transverse to the direction of transport (T), is altogether formed in a hook shape extending obliquely rearwards and upwards, and wherein optionally the leading front surface (73) of the catching head portion (51) is smaller than, optionally at most half the size of the trailing front surface (75) of the release head portion (61).

8. Subcarrier unit (3) according to any of claims 5 to 7, wherein the subcarrier unit (3) is formed as a tandem carrier, wherein, when seen in a direction of transport (T), no other roller runner is arranged between the first and second roller runners (13, 15).

9. Subcarrier unit (3) according to any of claims 5 to 8, wherein the first roller runner (13) comprises a leading front end (77) which, when seen transverse to the direction of transport (T), is substantially aligned with the peak of curvature of the convex (35) or the base of curvature of the concave of the front face (27) of the traverse (11), wherein optionally the leading front end (77) of the first roller runner is formed as a plane front surface (59) which optionally extends perpendicularly to the direction of transport (T), and/or wherein the second roller runner (15) has a trailing front end (81) which, when seen transverse to the direction of transport (T), is substantially aligned with the base of curvature of the concave (37) or with the peak of curvature of the convex of the rear face (29) of the traverse (17), wherein optionally the trailing front end (81) of the second roller runner (15) is formed as a plane front surface (83) which optionally extends perpendicularly to the direction of transport (T).

10. Suspended conveyor system (1) having
a transportation track (5) along which objects (9) to be transported are transportable in a direction of transport (T) suspended from the transportation track (5),
a catch device having a catch member (7) movable along the transportation track (5) and deflectable transverse to the catch member (7), and
a subcarrier unit (3) according to any of claims 5 to 9.

## Revendications

1. Sous-porteur (11) pour le transport suspendu d'un objet (9) dans une direction de transport (T) définie par une voie de transport (5) dans une installation de transport suspendu (1), ayant ou étant composé de :
une traverse (17) ayant une partie d'extrémité avant (19) et une partie d'extrémité arrière (21) relativement à la direction de transport (T), la traverse (17) étant configurée comme un corps dans l'ensemble rigide ayant un côté supérieur (23), un côté inférieur (25), une face avant (27) formée à la partie d'extrémité avant (19), une face arrière (29) formée à la partie d'extrémité arrière (23), et des côtés gauche et droit (31, 33) s'étendant entre le côté supérieur (23), le côté inférieur (25), les faces avant et arrière (27, 29), une convexe (35) étant formée par la face avant (27) et une concave (37) complémentaire à la convexe (25) étant formée par la face arrière (29) ou une concave étant formée par la face avant (27) et une concave complémentaire à la convexe étant formée par la face arrière, de sorte que des traverses (17) mutuellement adjacentes dans la direction de transport (T) peuvent s'engrener l'une avec l'autre à engagement positif sur la face,
un premier élément de suspension (39) formé à la partie d'extrémité avant (19) de la traverse (17) en s'étendant vers le haut au-delà du côté supérieur (23) de la traverse (17) et prévu pour être accroché à la voie de transport (5), le premier élément de suspension (39) étant optionnellement formé comme élément de crochet,
un deuxième élément de suspension (41) formé à la partie d'extrémité arrière (21) de la traverse (17) en s'étendant vers le haut au-delà du côté supérieur (23) de la traverse (17) et prévu pour être accroché à la voie de transport (5), le deuxième élément de suspension (29) étant optionnellement formé comme élément de crochet, et
un dispositif de suspension (43) formé à la traverse (17), optionnellement formé en s'étendant vers le bas au-delà du côté inférieur (25) de la traverse, et pour accrocher l'objet (9) à celui-ci, le dispositif de suspension (43) étant optionnellement disposé entre les premier et deuxième éléments de suspension (39, 41) et optionnellement étant réalisé sous forme d'un oeillet.

2. Sous-porteur (11) selon la revendication 1, dans lequel la traverse (17) est formée comme corps allongé avec une direction longitudinale s'étendant dans la direction de la partie d'extrémité avant (19) à la partie d'extrémité arrière (21).

3. Sous-porteur (11) selon l'une quelconque des revendications 1 et 2, dans lequel la concave respective (37) forme un canal passant du côté inférieur (25) jusqu'au côté supérieur (23).

4. Sous-porteur (11) selon l'une quelconque des revendications 1 à 3, dans lequel les côtés gauche et droit (31, 33) du corps formant la traverse (17) sont respectivement formés de façon essentiellement rectiligne lorsqu'ils sont vus dans la direction de la partie d'extrémité avant (19) vers la partie d'extrémité arrière (21).

5. Unité de sous-porteur (3) pour le transport suspendu d'un objet (9) dans une direction de transport (T) définie par une voie de transport (5) dans une installation de transport suspendu (1), ayant ou étant composée de :
un sous-porteur (11) selon l'une quelconque des revendications 1 à 4,
un premier curseur roulant (13) susceptible d'être déplacé de façon roulante guidée le long de la voie de transport (5) et comportant un premier rouleau rotatif (45) ayant un premier axe de rouleau (47) et un premier corpus de suspension (49) fixé au premier axe de rouleau (47), optionnellement ne fixé au premier axe de rouleau (47) qu'unilatéralement à partir d'un côté de rouleau, et comportant au-dessous du premier rouleau (45) un premier oeillet de suspension (60) avec lequel s'engrène le premier élément de suspension (39) du sous-porteur (11), et comportant une première partie de tête d'entraînement (51) qui est réalisée au-dessus du premier oeillet de suspension (50), optionnellement au-dessus du premier rouleau rotatif (45), de sorte qu'un élément d'entraînement (7) peut s'engrener avec la partie de tête d'entraînement en service, afin d'entraîner le premier curseur roulant (13) le long de la voie de transport (5) dans la direction de transport (T), la partie de tête d'entraînement (51) étant détachable de l'élément d'entraînement (7) par déviation de l'élément d'entraînement (7), et
un deuxième curseur roulant (15) susceptible d'être déplacé de façon roulante guidée le long de la voie de transport (5) et comportant un deuxième rouleau rotatif (53) ayant un deuxième axe de rouleau (55) et un deuxième corpus de suspension (57) fixé au deuxième axe de rouleau (55), optionnellement ne fixé au deuxième axe de rouleau (55) qu'unilatéralement à partir d'un côté de rouleau, et comportant au-dessous du deuxième rouleau (53) un deuxième oeillet de suspension (59) avec lequel s'engrène le deuxième élément de suspension (41) du sous-porteur (11), et comportant une partie de tête de détachement (61) qui est réalisée au-dessus du deuxième oeillet de suspension (59), optionnellement au-dessus du deuxième rouleau rotatif (53), de sorte que l'élément d'entraînement (7) peut s'engrener avec la partie de tête de détachement (61) en service, afin d'être déviée de la partie de tête de détachement (61) et afin de balayer la partie de tête de détachement (61) sans entraîner le deuxième curseur roulant (15).

6. Unité de sous-porteur (3) selon la revendication 5, dans laquelle la partie de tête d'entraînement (61) est prévue des deux côtés d'une surface oblique (65, 67) s'étendant de manière inclinée vers le haut et vers l'autre côté respectif relativement à la direction de transport (T), et/ou dans laquelle la partie de tête de détachement (61) est prévue des deux côtés d'une surface oblique (69, 71) s'étendant de manière inclinée vers le haut et vers l'autre côté respectif relativement à la direction de transport (T), dans laquelle les surfaces obliques (65, 67 voire 69, 71) de la partie de tête d'entraînement (51) et de la partie de tête de détachement (61) sont optionnellement essentiellement alignées l'une à l'autre des deux côtés relativement à la direction de transport (T), optionnellement sont essentiellement situées dans un même plan incliné.

7. Unité de sous-porteur (3) selon la revendication 5 ou 6, dans laquelle la partie de tête d'entraînement (51) est réalisée à sa face avant relativement à la direction de transport (T) avec une surface frontale (73) inclinée de façon oblique vers l'arrière et vers le haut, et/ou dans laquelle la partie de tête de détachement (61) est réalisée à sa face arrière relativement à la direction de transport (T) avec une surface frontale (75) inclinée de façon oblique vers l'avant et vers le haut, dans laquelle optionnellement la partie de tête d'entraînement (51), lorsqu'elle est vue dans une direction transversale à la direction de transport (T), est dans l'ensemble réalisée sous forme de crochet s'étendant de façon oblique vers l'arrière et vers le haut, et dans laquelle optionnellement la surface frontale avant (73) de la partie de tête d'entraînement (51) est inférieure à, optionnellement au maximum la moitié de la taille de la surface frontale arrière (75) de la partie de tête de détachement (61).

8. Unité de sous-porteur (3) selon l'une quelconque des revendications 5 à 7, dans laquelle l'unité de sous-porteur (3) est réalisée comme porteur tandem, dans laquelle aucun autre curseur roulant est disposé entre les premier et deuxième curseurs roulants (13, 15) lorsqu'ils sont vus dans la direction de transport (T).

9. Unité de sous-porteur (3) selon l'une quelconque des revendications 5 à 8, dans laquelle le premier curseur roulant (13) a une extrémité frontale avant (77) qui, lorsqu'il est vu transversalement à la direction de transport (T), s'aligne essentiellement avec le sommet de courbure de la convexe (35) ou avec la base de courbure de la concave de la face avant (27) de la traverse (11), dans laquelle optionnellement l'extrémité frontal avant (77) du premier curseur roulant est réalisée comme surface frontale plane (59) qui s'étend optionnellement perpendiculairement à la direction de transport (T), et/ou dans laquelle le deuxième curseur roulant (15) a une extrémité frontale arrière (81) qui, lorsqu'il est vu transversalement à la direction de transport (T), s'aligne essentiellement avec la base de courbure de la concave (37) ou avec le sommet de courbure de la convexe de la face arrière (29) de la traverse (17), dans laquelle optionnellement l'extrémité frontale arrière (81) du deuxième curseur roulant (15) est réalisée comme surface frontale plane (83) qui s'étend optionnellement perpendiculairement à la direction de transport (T).

10. Installation de transport suspendu (1), ayant
une voie de transport (5), le long de laquelle des objets (9) à être transportés sont susceptibles d'être transportés dans une direction de transport (T) suspendus à la voie de transport (5),
un dispositif d'entraînement ayant un élément d'entraînement (7) susceptible d'être déplacé le long de la voie de transport (5) et d'être dévié transversalement à la voie de transport (5), et
une unité de sous-porteur (3) selon l'une quelconque des revendications 5 à 9.
